# EUROPÄISCHE PATENTANMELDUNG

(11) **EP 1 090 728 A2**
(43) Veröffentlichungstag der Anmeldung: **11.04.2001**
(21) Anmeldenummer: 00120243.1
(22) Anmeldetag: 27.09.2000
(51) Int. Cl.: B29C 33/38

(54) **Verfahren zum Herstellen dreidimensionaler Strukturen aus metallischen Folien**

(30) Priorität: 07.10.1999 DE 19948151
(71) Anmelder: Volkswagen Aktiengesellschaft, 38436 Wolfsburg (DE)
(72) Erfinder: Reepschläger, Maik, 38440 Wolfsburg (DE)

(57) **Zusammenfassung**

Die Erfindung betrifft ein Verfahren zum Herstellen wenigstens einer dreidimensionalen Struktur, wobei zum Erzielen der Strukturen einzelne Schichten übereinander angeordnet und miteinander kraftschlüssig gefügt werden, und die Schichten entsprechend einer durch ein CAD-Programm vorgegebenen Geometrie durch ein Bearbeitungswerkzeug strukturiert werden und eine Verwendung einer nach einem der Ansprüche 1 bis 15 erhaltenen dreidimensionalen Struktur als Werkzeug, insbesondere als Zieh-, Spritzguß- und/oder Druckgußwerkzeug.

Es ist vorgesehen, daß die wenigstens eine Struktur (12) aus schichtweisem Fügen metallischer Werkstoffe erhalten wird, die als Folien (24) übereinander angeordnet werden, wobei eine Erstreckung der Folie (24) in x-, y-Richtung mindestens der x-, y-Erstreckung der zu erzielenden Struktur (12) entspricht, und nachfolgend durch das Bearbeitungswerkzeug (16) eine Strukturierung in x-, y- und z-Richtung der einzelnen Schichten erfolgt.

## Beschreibung

Die Erfindung betrifft ein Verfahren zum Herstellen dreidimensionaler Strukturen mit den im Oberbegriff des Anspruchs 1 genannten Merkmalen und eine Verwendung der dreidimensionalen Strukturen gemäß Anspruch 16.

Verfahren der gattungsgemäßen Art sind bekannt. Solche Verfahren dienen beispielsweise dem Erstellen eines Modells, welches zuvor mit Hilfe eines geeigneten Softwareprogrammes entworfen wurde. Dies ist insbesondere deshalb notwendig, da oft spezifische Eigenschaften des Modells nicht über eine Simulation zugänglich sind.

Bekannte Verfahren erstellen dreidimensionale Strukturen, entweder durch Vorgabe einer dreidimensionalen Schablone (Negativform), die abgeformt wird, oder die Struktur entsteht durch ein Aufeinanderschichten einzelner Schichten. Letzteres Verfahren ist als sogenanntes LOM-Verfahren (laminated object manufacturing) oder RT-Verfahren (rapid prototyping) bekannt.

Bei den bekannten Verfahren werden einzelne Schichten aus Papier, keramischen Werkstoffen oder Polymeren gefügt. Zum kraftschlüssigen Fügen der Schichten ist bekannt, einen Zusatzstoff (Haftvermittler) einzusetzen, der durch einen zusätzlichen Arbeitsschritt vor oder während des Verfahrens aufgetragen wird. Bekannt ist, als Haftvermittler einen Kleber einzusetzen, der jedoch nur eine geringe Temperaturbeständigkeit besitzt, so daß die Verwendung der erhaltenen dreidimensionalen Strukturen eingeschränkt ist.

Bei den bekannten Verfahren dienen üblicherweise CAD-Programme dazu, zunächst eine zu erzeugende dreidimensionale Struktur (CAD-Modell) zu errechnen und mittels einer dann gegebenen Steueranweisung ein Bearbeitungswerkzeug zum Erstellen der Struktur zu steuern. Im Rahmen des LOM-Verfahrens ist das Bearbeitungswerkzeug beispielsweise ein Laser. Hierbei werden folgende Arbeitsschritte durchgeführt:

Es wird jeweils auf eine bestehende Schicht eine neue Schicht aufgebracht. Die neue Schicht weist üblicherweise eine Erstreckung in x-, y-Richtung auf, die mindestens der x-, y-Erstreckung der bestehenden Schicht entspricht. Die beiden Schichten werden dann - wie erläutert - kraftschlüssig gefügt. Anschließend wird die neue Schicht durch den Laser bearbeitet, und zwar entsprechend der Geometrie, die durch das CAD-Modell vorgegeben ist. Bei allen bekannten RT(rapid prototyping)-Verfahren ist dabei ein Bearbeitungswinkel des Lasers fest vorgegeben. Der Bearbeitungswinkel beträgt dabei 90°, das heißt, daß eine Bearbeitungsrichtung des Lasers senkrecht zu der zu bearbeitenden Schicht gegeben ist. Durch den Laser wird dann mittels Laserschnitt eine, der Geometrie der Struktur entsprechende Außenkontur der zu bearbeitenden Schicht erzeugt.

Nachteilig bei einem solchen Verfahren ist die senkrechte Bearbeitungsrichtung und zwar aus folgenden Gründen:

Zum einen muß die Geometrie der Struktur zunächst in eine Abfolge einzelner Schichten zerlegt werden. Anschließend wird ausgehend von den Geometrien zweier aufeinanderfolgenden Schichten eine Bearbeitungsgeometrie berechnet, nach der der Laser den Schnitt durchführt. Ein solches Vorgehen benötigt einen erheblichen Rechenaufwand, der stark ansteigt, je dichter die Abfolge der einzelnen Schichten ist. Nicht abwendbar ist dabei ein Informationsverlust ausgehend von dem CAD-Modell zu einem Bearbeitungsmodell und damit einhergehend entsprechende Abweichungen (Fehler) der Kontur der zu erzeugenden Struktur.

Zum anderen ist nachteilig, daß die Bearbeitung mittels Laserschnitt zu Schichten führt, die in z-Richtung eine senkrechte Außenkontur aufweisen. Da herstellungsbedingt die Schichten in ihrer Erstreckung in z-Richtung nicht beliebig minimierbar sind, weist die erzeugte Struktur eine stufenförmige Außenkontur auf und muß nachbearbeitet werden. Eine Nachbearbeitung ist einerseits zeitaufwendig, und andererseits können durch die Nachbearbeitung zusätzliche Ungenauigkeiten hinsichtlich der Geometrie der Struktur auftreten, Insbesondere ein Einsatz der erzeugten Struktur als Präzisionswerkzeug ist damit nicht möglich.

Der Erfindung liegt die Aufgabe zugrunde, eine dreidimensionale Struktur mit wenig Zeitaufwand und mit hoher Genauigkeit zu erstellen.

Erfindungsgemäß wird diese Aufgabe durch ein Verfahren zum Herstellen dreidimensionaler Strukturen mit den im Anspruch 1 genannten Merkmalen gelöst. Dadurch, daß die Strukturen aus schichtweisem Fügen metallischer Werkstoffe erhalten werden, die bevorzugt als Folienmaterial übereinander angeordnet werden, wobei eine Erstreckung des Folienmaterials in x- und y-Richtung mindestens der x-, y-Erstreckung der zu erzielenden Struktur entspricht, und nachfolgend durch das Bearbeitungswerkzeug eine Strukturierung in x-, y- und z-Richtung der einzelnen Schichten erfolgt, kann in sehr einfacher Weise und mit hoher Genauigkeit die dreidimensionale Struktur erzeugt werden.

Durch die Strukturierung der einzelnen Schichten in x-, y- und z-Richtung wird erreicht, daß eine exakte, den Vorgaben entsprechende Außenkontur der dreidimensionalen Strukturen erreicht wird, ohne daß eine Nachbearbeitung erforderlich ist. Bereits die Strukturierung der einzelnen Schichten in x-, y- und z-Richtung führt dazu, daß eine Oberfläche erhalten wird, die frei von Stufen oder dergleichen ist.

In bevorzugter Ausgestaltung der Erfindung ist vorgesehen, daß die metallische Folie aus einem Verbundmaterial - aus der metallischen Folie selber und einem Haftvermittler - besteht. Hierdurch wird vorteilhaft möglich, da die Folie bereits mit einem Haftvermittler, insbesondere einem thermisch wirkenden Haftvermittler, versehen ist, während eines thermischen Fügens der einzelnen Schichten zu der dreidimensionalen Struktur auf einen zusätzlichen Verfahrensschritt, dem Aufbringen eines Haftvermittlers, zu verzichten. Verfahrenstechnisch läßt sich dieser Haftvermittler, insbesondere ein Lot, in einfacher Weise mit definierter Schichtstärke aufbringen. Hierdurch wird eine große Festigkeit der erhaltenen Struktur möglich. Ferner wird eine hohe Temperaturbeständigkeit erreicht, so daß eine Verwendungsmöglichkeit der dreidimensionalen Struktur auch in thermisch belasteten Fällen möglich wird.

Eine bevorzugte Verwendung derartiger dreidimensionaler Strukturen liegt im Einsatz als Werkzeug, insbesondere Zieh-, Spritzguß- und/oder Druckgußwerkzeug. Diese können somit einerseits mit hoher Präzision hergestellt werden und besitzen andererseits eine hohe Standzeit.

Eine Steuerung des Bearbeitungswerkzeuges erfolgt erfindungsgemäß derart, daß die Strukturierung der einzelnen Schichten in x-, y- und z-Richtung erfolgen kann. Dazu ist das Bearbeitungswerkzeug so gelagert, daß es in einem beliebigen Winkel und in einer beliebigen Raumrichtung verlagerbar ist. Damit entfällt die nach dem bisherigen Verfahren notwendige Berechnung einer Bearbeitungsgeometrie aus der durch das CAD-Modell gegebenen Geometrie der Struktur. Anstelle dessen kann zwecks Minimierung der zur Steuerung des Bearbeitungswerkzeuges notwendigen Daten beispielsweise ein Winkel α zwischen zwei auf der Außenkontur zweier benachbarter Bearbeitungsschichten liegenden Punkte berechnet werden. Das Bearbeitungswerkzeug führt dann entsprechend diesem Winkel eine Bearbeitung in x-, y-, z-Richtung durch. Einerseits entfallen auf diese Weise die Ungenauigkeiten, die infolge der Berechnung der Bearbeitungsstruktur bei dem bisherigen Verfahren auftraten, und andererseits entfällt die Nachbearbeitung.

Weitere bevorzugte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figuren 1 und 1a: eine schematische Anordnung der für das Verfahren notwendigen Komponenten;
- Figuren 2a bis 2e: eine schematische Darstellung des Ablaufs eines Arbeitszyklus;
- Figur 3: eine Struktur nach dem Stand der Technik;
- Figur 4: eine Struktur gemäß der Erfindung und
- Figur 5: eine schematische Darstellung des Ablaufs einer Datenerfassung der Geometrie eines Modells.

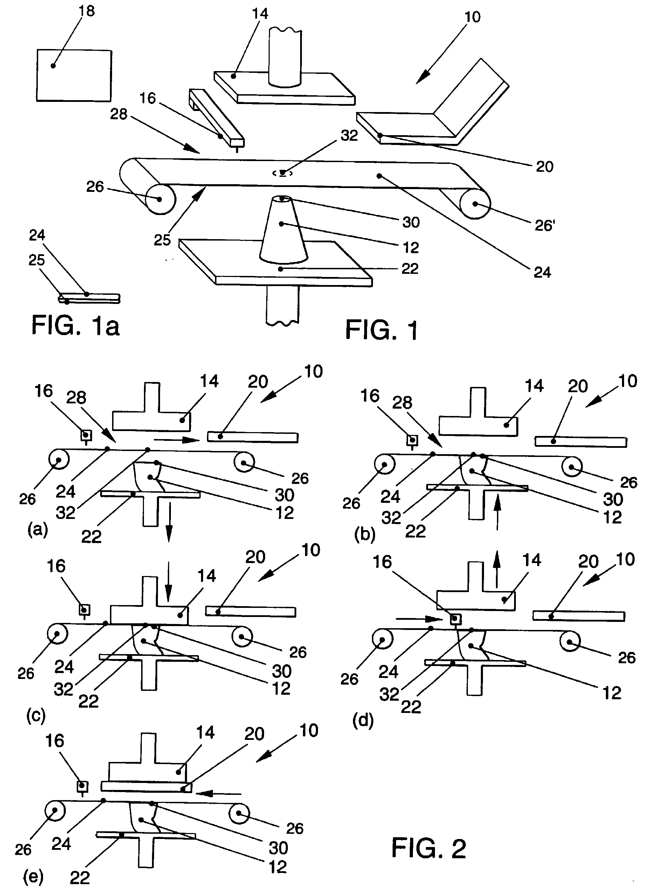

Die Figur 1 zeigt eine schematische Anordnung 10 der für ein Verfahren zum Herstellen dreidimensionaler Strukturen 12 notwendigen Komponenten. Diese Komponenten sind nur schematisch dargestellt, das heißt, nur die für das Verfahren notwendigen Bestandteile sind aus Gründen der Übersichtlichkeit dargestellt. Selbstverständlich umfaßt jede der gezeigten Komponenten Elemente, die eine Energieversorgung, eine Datensteuerung, eine Positionierung oder dergleichen ermöglichen. Aufgrund der hohen Variabilität soll hierauf jedoch im Rahmen der Beschreibung nicht weiter eingegangen werden. Ebenso ist eine relative Lage der einzelnen Komponenten zueinander in einem hohen Maße variabel.

Die Anordnung 10 umfaßt ein Element 14 zum kraftschlüssigen Fügen benachbarter Schichten und ein Bearbeitungswerkzeug 16, das eine Strukturierung der Schichten erlaubt. Weiterhin sind eine Rechnereinheit 18 sowie eine Absaugvorrichtung 20 zugeordnet.

Oberhalb der Struktur 12 ist schematisch eine Folie 24 dargestellt, die von einer Rolle 26 abrollbar und auf eine Rolle 26' aufwickelbar ist.

Die Folie 24 ist eine Metallfolie, die einseitig mit einem Haftvermittler 25 beschichtet ist. Der Haftvermittler 25 ist beispielsweise ein Lot (Figur 1a).

Das Element 14 ist ein thermisches Element. Das Element dient dazu, benachbarte Schichten aus der Metallfolie 24 miteinander zu fügen. Das kraftschlüssige Fügen erfolgt unter Druck und Temperatureinwirkung. Hierbei wird das Lot 25 zumindest bereichsweise, vorzugsweise vollflächig, aufgeschmolzen, so daß es zur Ausbildung einer Fügeverbindung - nach Erstarren des Lotes 25 - zwischen benachbarten Schichten der Folie 24 kommt.

Das Bearbeitungswerkzeug 16 ist in allen Raumrichtungen frei beweglich gelagert und kann in seiner Ausführung sehr variabel gestaltet werden. Vorteilhafterweise kann das Bearbeitungswerkzeug 16 eine Fräse sein, insbesondere eine Hochgeschwindigkeitsfräse. Neben den Fräsen sind beliebige andere Werkzeuge einsetzbar, die eine Strukturierung der zu bearbeitenden Schichten erlauben. In Frage kommen Laser, Schneidplatten, Bohrer oder dergleichen. Welches Bearbeitungswerkzeug 16 eingesetzt wird, hängt stark von der zu erzeugenden Struktur 12 ab. Ferner ist eine Kombination mehrerer Bearbeitungswerkzeuge 16 möglich, wobei diese entweder gleichzeitig oder aufeinanderfolgend die Struktur 12 erzeugen.

Die während der Bearbeitung entstehenden Stäube oder Partikel werden durch die Absaugvorrichtung 20 entfernt. Diese ist in einer bevorzugten Ausführungsform beweglich gelagert und kann somit in einen Arbeitsbereich 28 verlagert werden.

Die Anordnung 10 umfaßt weiterhin die Rechnereinheit 18. Diese dient der Steuerung der Komponenten 14, 16, 20, 22. Die Steuerung setzt eine Erfassung notwendiger Systemdaten (zum Beispiel Position der Komponenten, Temperatur etc.) voraus, was durch geeignete Sensoren ermöglicht wird. Eine solche Erfassung ist bekannt und wird daher in diesem Zusammenhang nicht näher erläutert.

Die Steuerung erfolgt durch ein CAD-Programm. Das CAD-Programm beinhaltet ein Rechenmodell der zu erzielenden dreidimensionalen Struktur 12 (CAD-Modell). Die sich hieraus ergebenden Daten für die Geometrie der Struktur 12 werden zur Steuerung des wenigstens einen Bearbeitungswerkzeuges 16 genutzt.

Die Folie 24, deren Enden auf den Rollen 26 aufgewickelt sind und die gespannt über der Struktur 12 angeordnet ist, liefert das Material für die einzelnen Schichten, die aufeinanderfolgend die fertige Struktur 12 ergeben. Zur Veranschaulichung ist auf der Folie 24 ein Abschnitt dargestellt, der eine neue Schicht 32 zeigt, die auf einer obersten Schicht 30 der Struktur 12 aufgebracht werden soll.

Besonders vorteilhaft ist es, die Folien 24 mittels der Rollen 26 dem Arbeitsbereich 28 zuzuführen. Auf diese Weise kann eine hohe Vorschubgeschwindigkeit erreicht werden und ein quasi kontinuierlicher Arbeitsablauf zum Aufbau der Struktur 12 erfolgen.

Figur 2 zeigt schematisch den Ablauf eines Arbeitszyklus. Gleiche Teile sind jeweils mit gleichen Bezugszeichen versehen. Der Arbeitszyklus ist in dem gezeigten Ausführungsbeispiel in fünf einzelne Arbeitsschritte gegliedert, die mit (a) bis (e) bezeichnet sind.

Während des Arbeitsschrittes (a) wird die Struktur 12, die auf einer Arbeitsplattform 22 eingespannt ist und die zum Fügen der letzten Schicht 30 an der Folie 24 anlag, nach unten weggeführt. Weiterhin erfolgt ein Vorschub der Folie 24 mittels der Rollen 26, so daß im Arbeitsbereich 28 ein Abschnitt der Folie 24 liegt, der die neue Schicht 32 bilden soll.

Während des Arbeitsschrittes (b) wird die Struktur 12 durch die bewegliche Arbeitsplattform 22 wieder an die Folie 24 geführt, so daß die Schichten 30 und 32 aneinanderliegen, wobei das Lot 25 der neuen Schicht 32 auf der metallischen Folie 24 der alten Schicht 30 zu liegen kommt.

Im folgenden Arbeitsschritt (c) wird das Element 14 derart in den Arbeitsbereich 28 gebracht, daß es durch Druck oder Temperatur ein Fügen der Schichten 32 und 30 ermöglicht. Hierbei wird das Lot 25 aufgeschmolzen und erstarrt anschließend.

Nachdem das Element 14 wieder nach oben weggeführt wurde, beginnt die Strukturierung mittels des Bearbeitungswerkzeuges 16 (Arbeitsschritt (d)). Dieses ist in den Arbeitsbereich 28 verlagerbar und bearbeitet die Folie 24 derart, daß die Außenkontur der Schicht 32 entsteht.

Entstehende Stäube und/oder Partikel werden durch die Absaugvorrichtung 20 im Arbeitsschritt (e) entfernt. Anschließend kann das Verfahren mit einer beliebigen Anzahl von Arbeitszyklen fortgesetzt werden, die jeweils wieder mit dem Arbeitsschritt (a) beginnen.

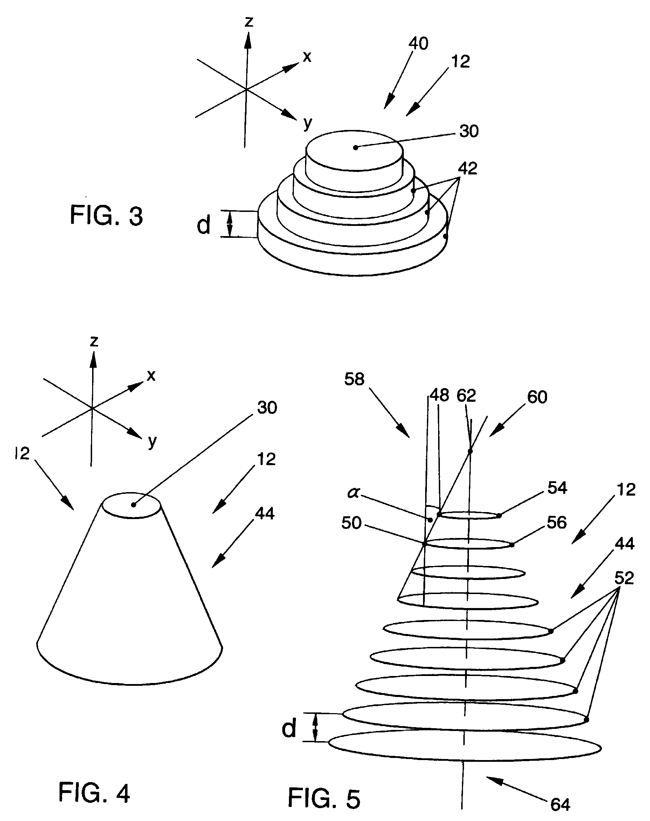

Figur 3 zeigt gemäß Stand der Technik ein Modell 40, das durch ein Verfahren hergestellt wurde. Das Modell 40 besteht aus einzelnen Schichten 42, die in z-Richtung aufeinandergestapelt sind. Die Außenkontur des Modells 40 ist stufenförmig in z-Richtung ausgebildet, wobei die einzelnen Stufen eine Höhe d aufweisen. Bei der Herstellung wird eine Folie 24 mit dieser Höhe d verwendet. Es erfolgte lediglich eine Strukturierung in x-, y-Richtung, so daß zum Erzielen einer Kegelstumpfform eine Nachbearbeitung der Außenkontur erfolgen müßte.

Figur 4 zeigt hingegen ein mit dem erfindungsgemäßen Verfahren hergestelltes Modell 44. Das Modell 44 ist dabei als ein Kegelstumpf ausgebildet. Das Modell besitzt durch die Bearbeitung in x-, y- und z-Richtung eine gewollte, nicht nachzubearbeitende Oberfläche.

In der Figur 5 ist in einer schematischen Darstellung der Ablauf einer Datenerfassung der Geometrie des Modells 44 dargestellt. Zunächst wird mittels des CAD-Programmes das Modell 44 entworfen. Dieses wird dann in einzelne Bearbeitungsschichten 52 zerlegt, wobei der Abstand d bevorzugt der Dicke der Folie 24 entspricht. Dabei liegt jede einzelne Bearbeitungsschicht 52 in einer z-Ebene und beinhaltet die vollständigen x-, y-Koordinaten der Außenkontur dieser Ebene des Modells 44.

Bei dem bekannten LOM-Verfahren wird ausgehend von einem Punkt 48 der Außenkontur einer Bearbeitungsschicht 54 und wenigstens einem Punkt 50 in einer benachbarten Bearbeitungsschicht 56 ein neuer gemeinsamer Wert für die x-, y-Koordinaten gebildet. Das Verfahren der Berechnung ist hier nur vereinfacht dargestellt und kann beispielsweise durch ein komplexes Rechenprogramm erfolgen. Der Abstand d entspricht bei den bekannten Verfahren mindestens der Dicke der Folie 24 oder ist ein ganzes Vielfaches dieser Dicke.

Das Bearbeitungswerkzeug 16 strukturiert anhand der berechneten Koordinaten jeweils die oberste Schicht 32 (Figur 2). Innerhalb eines Bereiches, der durch den Abstand d gegeben ist, sind alle x-, y-Koordinaten gleich. Soll nun das Modell 44 - also ein Kegel - erzeugt werden, so ergibt sich nach dem bekannten Verfahren eine stufenförmige Struktur, die dem Modell 40 der Figur 3 entspricht und die infolgedessen nachbearbeitet werden muß.

In einer bevorzugten Ausgestaltung des erfindungsgemäßen Verfahrens wird zur Vermeidung dieses Nachteils ein Bearbeitungswinkel α berechnet. Beispielhaft sei hier eine Ermittlung des Winkels α zwischen den Bearbeitungsschichten 54, 56 des Modells 44 illustriert. Dazu wird durch den Punkt 50 eine Gerade 58, die parallel zu einer Mittelachse 64 des Modells 44 liegt, sowie eine Schnittgerade 60 gelegt. Zwischen diesen beiden Geraden 58, 60 spannt sich der Winkel α auf. Die Schnittgerade 60 schneidet dabei zusätzlich die Mittelachse 64 in einem Punkt 62. Die Lage des Punktes 62 auf der Mittelachse 64 ist dabei gerade so gewählt, daß die Schnittgerade 60 durch den Punkt 48 verläuft. Während der Steuerung des Bearbeitungswerkzeuges 16 wird dieses gemäß dem ermittelten Winkel α geführt, so daß das Modell 44 die gewünschte Oberflächenstruktur aufweist, ohne daß eine weitere Nachbearbeitung erforderlich ist.

Selbstverständlich läßt sich mit dem erfindungsgemäßen Verfahren ein Modell 44 erzielen, das auch eine, von Kegelstumpfform abweichende Form aufweist. Durch die Bearbeitung der einzelnen Schichten 32 während des Laminierens in x-, y- und z-Richtung lassen sich mit reproduzierbarer Genauigkeit vielfältige Formen erzielen. Insbesondere durch die gleichzeitig vorgesehene Bearbeitung in z-Richtung werden beispielsweise konkave und/oder konvexe Bogenübergänge, Hinterschneidungen oder dergleichen möglich. Hierdurch werden Modelle erzielt, die insbesondere als Präzisionswerkzeuge einsetzbar sind. Aufgrund der bestehenden Festigkeit durch die verwendete Metallfolie und das kraftschlüssige Fügen mit dem Lot 25 erreichen diese Werkzeuge eine hohe Standfestigkeit. Die CAD-gesteuerte Erzeugung der Außenkontur gewährleistet gleichzeitig eine sehr hohe Maßhaltigkeit. Ein Nachbearbeiten der Kontur ist nicht erforderlich, so daß mittels derartiger Werkzeuge Werkstücke mit hoher Oberflächengüte erzeugt werden können. Die auf Basis der Modelle 44 ausgebildeten Werkzeuge lassen sich beispielsweise als Spritzguß-, Druckguß- oder Ziehwerkzeuge einsetzen.

## Patentansprüche

1. Verfahren zum Herstellen wenigstens einer dreidimensionalen Struktur, wobei zum Erzielen der Strukturen einzelne Schichten übereinander angeordnet und miteinander kraftschlüssig gefügt werden, und die Schichten entsprechend einer durch ein CAD-Programm vorgegebenen Geometrie durch ein Bearbeitungswerkzeug strukturiert werden, **dadurch gekennzeichnet,** daß die wenigstens eine Struktur (12) aus schichtweisem Fügen metallischer Werkstoffe erhalten wird, die als Folien (24) übereinander angeordnet werden, wobei eine Erstreckung der Folie (24) in x-, y-Richtung mindestens der x-, y-Erstreckung der zu erzielenden Struktur (12) entspricht, und nachfolgend durch das Bearbeitungswerkzeug (16) eine Strukturierung in x-, y- und z-Richtung der einzelnen Schichten erfolgt.

2. Verfahren nach Anspruch 1, **dadurch gekennzeichnet,** daß die Folien (24) durch ein thermisch wirkendes Element (14) gefügt werden.

3. Verfahren nach einem der vorhergehenden Ansprüche, **dadurch gekennzeichnet,** daß die Folie (24) diskontinuierlich als Bandmaterial in einen Bearbeitungsbereich (28) befördert wird.

4. Verfahren nach einem der vorhergehenden Ansprüche, **dadurch gekennzeichnet,** daß die Folie (24) aus einem Verbundmaterial - aus der Folie (24) selber und einem Haftvermittler (25) - besteht.

5. Verfahren nach einem der vorhergehenden Ansprüche, **dadurch gekennzeichnet,** daß das Bearbeitungswerkzeug (16) in alle Raumrichtungen freibeweglich gelagert ist.

6. Verfahren nach Anspruch 5, **dadurch gekennzeichnet,** daß die Bearbeitung durch eine Fräse, insbesondere eine Hochgeschwindigkeitsfräse, erfolgt.

7. Verfahren nach Anspruch 5, **dadurch gekennzeichnet,** daß die Bearbeitung durch einen Laser, eine Schneidplatte, ein Bohrer oder dergleichen erfolgt.

8. Verfahren nach der Ansprüche 5, 6 und 7, **dadurch gekennzeichnet,** daß eine gleichzeitige Bearbeitung mit mehreren Bearbeitungswerkzeugen (16) erfolgt.

9. Verfahren nach Anspruch 8, **dadurch gekennzeichnet,** daß die Bearbeitungswerkzeuge (16) nacheinander oder gleichzeitig eingesetzt werden.

10. Verfahren nach einem der vorhergehenden Ansprüche, **dadurch gekennzeichnet,** daß während der Bearbeitung anfallende Späne oder dergleichen abgesaugt werden.

11. Verfahren nach Anspruch 10, **dadurch gekennzeichnet,** daß die Absaugung durch eine verlagerbare Absaugvorrichtung (20) erfolgt.

12. Verfahren nach einem der vorhergehenden Ansprüche, **dadurch gekennzeichnet,** daß das Verfahren durch eine Rechnereinheit (18) gesteuert wird.

13. Verfahren nach Anspruch 12, **dadurch gekennzeichnet,** daß die Rechnereinheit (18) zur Steuerung eines Arbeitszyklus dient, wobei der Arbeitszyklus aus dem Aufbringen, Fügen und Strukturieren der einzelnen Schichten (30, 32) besteht.

14. Verfahren nach Anspruch 13, **dadurch gekennzeichnet,** daß die Rechnereinheit (18) ein CAD-Programm beinhaltet, wobei mittels des CAD-Programmes ein CAD-Modell erstellt wird, das in seiner Geometrie der zu erzeugenden Struktur (12) entspricht.

15. Verfahren nach Anspruch 14, **dadurch gekennzeichnet,** daß
a) das CAD-Modell in Bearbeitungsschichten (52) aufgeteilt wird;
b) die Bearbeitungsschichten (52) in der z-Ebene der zu erzeugenden Struktur (12) liegen;
c) ein Winkel (α) berechnet wird; wobei
d) der Winkel (α) zwischen einer Geraden (58), die parallel zu einer Mittelachse (64) angeordnet ist, sowie einer Schnittgeraden (60) liegt;
e) auf einer Außenkontur zweier benachbarter Bearbeitungsschichten (54, 56) jeweils ein Punkt (48) und ein Punkt (50) festgelegt wird, und daß der Punkt (50) weiter entfernt von der Mittelachse (64) liegt als der Punkt (48); und
f) die Schnittgerade (60) die Punkte (48, 50) und die Mittelachse (64) in einem Punkt (62) schneidet; und
g) die Gerade (58) durch den weiter außen gelegenen Punkt (50) verläuft.

16. Verwendung einer nach einem der Ansprüche 1 bis 15 erhaltenen dreidimensionalen Struktur als Werkzeug, insbesondere als Zieh-, Spritzguß- und/oder Druckgußwerkzeug.
